# EUROPEAN PATENT APPLICATION

(11) **EP 4 468 471 A1**
(43) Date of publication of application: **27.11.2024**
(21) Application number: 24177462.9
(22) Date of filing: 22.05.2024
(51) Int. Cl.: H01M 50/121, H01M 50/124

(54) **FILM FOR CELL POUCH AND METHOD OF STORING THEREOF**

(30) Priority: 23.05.2023 KR 20230066379; 09.05.2024 KR 20240061080
(71) Applicant: Youlchon Chemical Co., Ltd., Seoul 07057 (KR)
(72) Inventor: SONG, Nok Jung, 07057 Seoul (KR); HAN, Hee Sik, 15430 Ansan-si (KR); KIM, Huihun, 15430 Ansan-si (KR); JANG, Jee Eun, 15430 Ansan-si (KR); LEE, Doohee, 15430 Ansan-si (KR); SHIN, Sung Chul, 15430 Ansan-si (KR); SONG, Moonkyu, 15430 Ansan-si (KR)
(74) Representative: V.O.

(57) **Abstract**

The specification discloses a film for a cell pouch and a storage method of the film. According to this disclosure, the efficiency of a slip agent may be improved by controlling the storage temperature after manufacturing the film for a cell pouch. The phenomenon of excessive leakage of the slip agent on the surface is minimized while comprising a small amount of the slip agent. Therefore, the film according to the present disclosure may exhibit excellent formability and at the same time prevents excessive leakage of the slip agent, thereby preventing a decrease in process efficiency due to the slip agent.

## Description

### Field of the Invention

This specification relates to a film for a cell pouch and a storage method thereof.

### Cross-reference to related application

This application claims priority to Korean Patent Application No. 10-2023-0066379, filed on May 23, 2023 and Korean Patent Application No. 10-2024-0061080, filed on May 9, 2024, and the entire contents of the application are incorporated by reference into this application.

### Description of state-supported research and development

This study was conducted through the national project below.
- Name of Government department: Ministry of Trade, Industry and Energy,

Project management (professional) Name of organization: Korea Planning and Evaluation Institute of Industrial Technology
Research Business Name: Material Component Package Type (Top Company),
Research Project Name: Development of a next-generation secondary battery pouch that may achieve more than twice the high adhesive strength (60 °C)
Name of organization implementing project: Youlchon Chemical Co., Ltd.,
Project Number: 20022450,
Project Identification Number: 1415185612

### Description of the Related Art

Pouch-type batteries, which are generally used in electric vehicles, have the advantages that it is easy to change shape and has high energy density compared to cylindrical or square shapes. A cell pouch is an exterior material that surrounds the battery's electrode group and electrolyte, has to satisfy the required characteristics such as adhesion between layers of metal thin film and polymer, heat fusion strength, electrolyte resistance, airtightness, moisture permeability, and formability, and has to have high formability characteristics, especially in order to apply them to large batteries such as electric vehicles (EVs) and energy storage systems (ESS). Accordingly, the cell pouch necessarily comprise a slip agent as an additive to improve formability, and the slip agent provides formability by flowing out to the surface of the outermost layer of the pouch depending on temperature and pressure after manufacturing. However, since the slip agent particles aggregate and cause contamination in the process, causing a sharp decrease in process efficiency when an excessive amount of the slip agent is leaked, there is a need for the development of a film for cell pouches that may provide high formability while preventing agglomeration of slip agents.

### SUMMARY OF THE INVENTION

### Tasks to be solved

The problem that the present disclosure aims to solve is to provide a cell pouch film with excellent formability and reduced leakage of a slip agent, and a storage method thereof.

### Means for solving the problem

One embodiment of the present disclosure is a film for a cell pouch, comprising:
a sealant layer comprising a slip agent;
a metal layer formed on the sealant layer; and
an outer layer formed on the metal layer, wherein when the film was stored for 30 days at a temperature of 48 to 57 °C and then the outer surface of a black pouch is rubbed with the sealant layer or outer layer of the film at a speed of 400 mm/10 s using a slip inspection device in which a 1.3 kgf cube-shaped metal is wrapped in a black pouch with a matte black exterior and an outer layer made of nylon, the surface roughness value of the portion where the slip agent leaking from the film forms a white band on the black pouch satisfies Rt 13 to 20 µm and Rz 10 to 15 µm.

Another embodiment of the present disclosure provides a cell pouch comprising the film for a cell pouch.

Another embodiment of the present disclosure provides a method for storing the film for a cell pouch, comprising: a step of storing the film at a temperature of 48 to 57 °C.

### EFFECTS OF THE INVENTION

According to one embodiment of the present disclosure, the efficiency of a slip agent may be improved by controlling the storage temperature after manufacturing the film for a cell pouch. The phenomenon of excessive leakage of the slip agent on the surface is minimized while comprising a small amount of the slip agent. Therefore, the film according to the present disclosure exhibits excellent formability and at the same time prevents excessive leakage of the slip agent, thereby preventing defects in the process due to the slip agent.

### BRIEF DESCRIPTION OF THE DRAWINGS

FIG. 1 shows the results of measuring the surface roughness of examples 1, 2, and comparative example 4 in test example 1.
FIG. 2 is an image taken of a slip inspection device used in test example 2.
FIG. 3 is an image taken of a black pouch after a slip test in test example 2.
FIG. 4 is a diagram showing a slip test evaluation criteria (grades S, A, B) in test example 2.
FIG. 5A shows the results of particle size analysis of the particles formed by agglomeration of a slip agent in example 1 (storage temperature 50 °C) after a slip test in test example 2. (80 magnification image)
FIG. 5B shows the results of particle size analysis of the particles formed by agglomeration of a slip agent in example 1 (storage temperature 50 °C) after a slip test in test example 2. (450 magnification image)
FIG. 6A shows the results of particle size analysis of the particles formed by agglomeration of the slip agent in comparative example 4 (storage temperature 45 °C) after the slip test in test example 2. (80 magnification image)
FIG. 6B shows the results of particle size analysis of particles formed by agglomeration of the slip agent in comparative example 4 (storage temperature 45 °C) after the slip test in test example 2. (450 magnification image)

### [DETAILED DESCRIPTION OF THE EMBODIMENTS]

Hereinafter, preferred embodiments of the present disclosure will be described in detail with reference to the attached drawings.

The embodiments of the present disclosure disclosed in the text are illustrative only for illustrative purposes, and the embodiments of the present disclosure may be implemented in various forms and should not be construed as limited to the embodiments described in the text. Since the present disclosure may be subject to various changes and may take various forms, the embodiments are not intended to limit the present disclosure to a specific disclosed form, and should be understood to include all changes included in the spirit and technical scope of this disclosure, equivalents, and substitutes.

Singular expressions include a plurality of expressions unless the context clearly dictates otherwise. In the application, terms such as "comprise", "contain", "include", or "have" are intended to designate the presence of features, numbers, steps, operations, components, parts, or combinations thereof described in the specification, and the presence or addition of one or more other features, numbers, steps, operations, components, parts or combinations thereof is not excluded.

In the specification, a "cell" refers to a battery, and has the broadest meaning to include all types of batteries such as secondary batteries such as lithium ion batteries and lithium polymer batteries, or portable storage batteries.

In the specification, a "cell pouch" is one in which cell components such as anode, cathode, and separator are impregnated and stored in an electrolyte solution, and has the broadest meaning which includes a film with a laminated structure which takes into account gas barrier property, bendability, electrolyte resistance property, and heat-sealing property in order to store the cell components, and is processed into a pouch or box shape.

In the specification, "formability" refers to the property of being able to process a film for a cell pouch into a desired shape without cracking or breaking, and maintaining that shape. For example, the formability may be evaluated by applying a pressure of 0.3 MPa to a specimen cut from a cell pouch film and measuring the maximum depth at which no cracks or breaks occur when molded into a single cup shape, and more specifically, the formability may be determined by applying a deeper depth when all 10 out of 10 identical film specimens are not broken, and the depth just before which may be defined as the maximum height when even one break occurs. For example, the formability may be evaluated using a rectangular shaped cup (entrance size: 16 cm x 9 cm). More specifically, it may be evaluated through Gwangshin Hi-Tech's GS-S5 model.

One embodiment of the present disclosure is a film for a cell pouch comprising a sealant layer, a metal layer formed on the sealant layer, and an outer layer formed on the metal layer, wherein the sealant layer comprises a slip agent, and when the film was stored for 30 days at a temperature of 48 to 57°C and then a slip inspection device is used in which a metal in the form of a cube weighing 1.3 kgf is wrapped in a black pouch with a matt black exterior and an outer layer made of nylon, the outer surface of the black pouch is rubbed with the sealant layer or outer layer of the film at a speed of 400 mm/10 s, the surface roughness value of the portion where the slip agent leaking from the film forms a white band on the black pouch satisfies Rt 13 to 20 µm and Rz 10 to 15 µm.

According to one embodiment of the present disclosure, the film may be stored at a temperature of 48 to 57 °C, and excessive leakage of the slip agent and agglomeration of the slip agent may be prevented by controlling the storage temperature. Specifically, the storage temperature may be 48 °C or higher, 49 °C or higher, 50 °C or higher, 51 °C or higher, 52 °C or higher, 53 °C or higher, or 54 °C or higher, and may be 57 °C or less, 56 °C or less, 55 °C or less, 54 °C or less, 53 °C or less, 52 °C or less, or 51 °C or less. When the storage temperature exceeds 57°C, the formability may decrease, and when it is lower than 48 °C, excess slip agent may leak and coagulate, causing defects in the process and reducing product reliability.

In one embodiment, the storage period may be 10 to 300 days. Specifically, it may be 10 days or more, 20 days or more, 30 days or more, 40 days or more, 50 days or more, 60 days or more, 70 days or more, 80 days or more, 90 days or more, 100 days or more, 150 days or more, 200 days or 250 days or more, and may be 300 days or less, 200 days or less, 100 days or less, 90 days or less, 80 days or less, 70 days or less, 60 days or less, 50 days or less, 40 days or less, 30 days or less, 20 days or less, or 10 days or less.

In one embodiment, the relative humidity during storage may be 5% to 25%. In the present disclosure, "relative humidity (RH)" herein is a value expressed as a percentage (%) of the amount of water vapor currently comprised in the air compared to the saturated water vapor pressure that a certain volume of air may hold at its maximum.

In one embodiment, the surface roughness of the film is a parameter of the state in which the slip agent comprised in the sealant layer of the film flows out to the sealant layer and the outer layer, respectively, and partially agglomerations. In the disclosure, the surface roughness refers to the degree of fine irregularities existing on the surface, that is, the roughness of the surface. Among the surface roughness parameters, Rt is the maximum height roughness and measures the vertical distance between two parallel lines which are parallel to the center line of the roughness curve within the standard length (cut-off) of the sampled part and pass through the highest and lowest points of the curve. Rz is the ten point median height, which measures the distance between the average height from the highest peak to the fifth peak and the average valley depth from the lowest peak to the fifth peak.

In one embodiment, the black pouch used to measure the surface roughness is a pouch (manufacturer: Yulchon Chemical Co., Ltd.) with a matt black exterior and an outer layer made of nylon. When the black pouch is rubbed, the outer surface of the black pouch and the sealant layer or outer layer of the film are rubbed, and the slip agent leaked from the film may be smeared on the surface of the black pouch, forming a white band. The present disclosure has found that when the film comprising the slip agent in the sealant layer exhibits the above-mentioned surface roughness range, a small amount of the slip agent flows out, forming small agglomerated particles, while showing high formability, and in view of the above, the surface roughness value of the portion where the white band is formed when measured according to the above method may satisfy Rt 13 to 20 µm and Rz 10 to 15 µm. Here, the surface roughness value may be a value obtained when the sealant layer is rubbed once or the outer layer is repeatedly rubbed in the same direction five times. Specifically, the surface roughness Rt value (µm) may be 13 or more, 14 or more, 15 or more, 16 or more, 17 or more, 18 or more, or 19 or more, and 20 or less, 19 or less, 18 or less, 17 or less, 16 or less, 15 or less, or 14 or less. Additionally, the surface roughness Rz value (µm) may be 10 or more, 11 or more, 12 or more, 13 or more, or 14 or more, and may be 15 or less, 14 or less, 13 or less, 12 or less, or 11 or less. Films whose surface roughness Rt and Rz values are outside the above range may have excessive leakage of slip agent during the slip test, resulting in the presence of agglomerated particles exceeding 60 µm on the surface of the sealant layer, and may have a low coefficient of friction and formability of the sealant layer.

In one aspect, when the film according to one embodiment was stored for 30 days at a temperature of 48 to 57°C and then the outer surface of the black pouch of the lubricant test device is rubbed with the sealant layer or outer layer of the film at a speed of 400 mm/10 s using the same slip testing device as described above, the average diameter of the largest agglomerated particles among the slip agent agglomerated particles present in the area where the slip agent leaked from the film forms a white band on the black pouch may be 60 µm or less. Here, the slip agent agglomerated particles refer to particles formed by agglomerating the leaked slip agent. As the slip agent flows out excessively, the particle size increases. Among the sizes of the slip agent agglomerated particles, the largest agglomerated particle refers to the largest agglomerated particle among the formed agglomerated particles, and the average diameter refers to the average value of the diameter measured from one agglomerated particle. Specifically, the maximum agglomerated particle size among the slip agent agglomerated particle sizes may refer to agglomerated particles of the largest size, whichever is 100% or less, 98% or less, 96% or less, 94% or less, 92% or less, 90% or less, 88% or less, 86% or less, 84% or less, 82% or less, or 80% or less of all slip agent agglomerated particles. Or, specifically, the largest agglomerated particle among the slip agent agglomerated particle sizes may mean the largest agglomerated particle among the agglomerated particles included in the image taken with a scanning electron microscope (SEM). Here, the slip agent agglomerated particle size value may be the value obtained when the sealant layer is rubbed once or the outer layer is repeatedly rubbed in the same direction five times. More specifically, the slip agent agglomerated particle size may be 60 µm or less, 50 µm or less, or 40 µm or less. In one embodiment, the agglomerated particle size may be confirmed through a microscope image.

From one perspective, the film according to one embodiment may have a formability of 15 to 25 mm after being stored for 30 days at a temperature of 48 to 57 °C. Here, the formability is measured by applying a pressure of 0.3 MPa to the film and measuring the maximum depth at which no breakage occurs when molding 1 cup (16 cm X 9 cm). More specifically, the formability may be 15 mm or more, 16 mm or more, 17 mm or more, 18 mm or more, 19 mm or more, 20 mm or more, 21 mm or more, 22 mm or more, or 23 mm or more, and may be 25 mm or less, 24 mm or less, 23 mm or less, 22 mm or less, 21 mm or less, or 20 mm or less.

In one aspect, when the film according to one embodiment is stored at a temperature of 48 to 57 °C for 30 days and then the following friction coefficient is evaluated, the friction coefficient of the sealant layer according to one embodiment of the disclosure may be 0.15 to 0.5: (a) After manufacturing a cell pouch using a film according to an embodiment of the present disclosure, a specimen thereof is prepared in a size of 200 mm X 100 mm and then adhered flat to the bottom of the friction coefficient measuring device, (b) Afterwards, a 70 mm X 60 mm-sized specimen of the same cell pouch as above is fixed to a frame for measuring the friction coefficient, (c) Afterwards, the frame provided in the friction coefficient measuring device is attached between the two pouches so that it contacts both pouches, and the bottom of the device moves at a speed of 15 mm/1 s for 55 seconds to measure the friction coefficient between the sealant layers of the two pouches. In one embodiment, the friction coefficient measuring device may be Labsink 's CF-800XS model. Specifically, the friction coefficient may be 0.15 or more, 0.2 or more, 0.25 or more, or 0.3 or more, and may be 0.5 or less, 0.4 or less, 0.35 or less, 0.3 or less, 0.25 or less, or 0.2 or less.

In the present disclosure, the material and thickness of each layer of the film are not limited as long as it may be manufactured as a film for a cell pouch, but may comprise, for example, the following configuration.

In the present disclosure, the sealant layer refers to a layer which provides sealing property by being bonded by heat after cells are embedded as an inner layer. As one embodiment, the sealant layer may comprise a heat-sealing resin, that is, a sealing resin for heat-sealing. Specifically, the sealant layer may comprise one or more selected from the group consisting of polyolefins such as polypropylene (PP) and polyethylene (PE), co-polymers thereof, ter-polymers or derivatives thereof, and ethylene vinyl acetate (EVA). The co-polymer or ter-polymer may comprise an ethylene/propylene copolymer or a terpolymer of ethylene/propylene/butadiene. As one embodiment, the sealant layer may have a thickness of 20 µm to 100 µm. The sealant layer may be composed of a plurality of layers.

In the present disclosure, the slip agent refers to an additive for reducing the coefficient of friction on the film surface and providing lubricity and formability. In one embodiment, the slip agent may comprise one or more of wax-based, amide-based, siloxane, and silicone. Specifically, the slip agent may be an oleic acid amide-based slip agent. More specifically, the slip agent may comprise one or more of erucamide, behenamide, stearamide, and oleamide.

In one embodiment, the film may comprise 0.1 to 20% by weight of the slip agent based on the total weight of the sealant layer. Specifically, the film may comprise 0.1% by weight or more, 0.2% by weight or more, 0.3% by weight or more, 0.4% by weight or more, 0.5% by weight or more, 0.6% by weight or more, 0.7% by weight or more, 0.8% by weight or more, 0.9% by weight or more, 1% by weight or more, 2% by weight or more, 3% by weight or more, 4% by weight or more, 5% by weight or more, 6% by weight or more, 7% by weight or more, 8% by weight or more, 9% by weight or more, 12% by weight or more, 15% by weight or more, and 17% by weight or more or 19% by weight or more of the slip agent based on the total weight of the sealant layer, and may comprise 20% by weight or less, 17% by weight or less, 15% by weight or less, 13% by weight or less, 10% by weight or less, 9% by weight or less, 8% by weight or less, 7% by weight or less, 6% by weight or less, 5% by weight or less, 4% by weight or less, 3% by weight or less, 2% by weight or less, and 1% by weight or less or 0.5% by weight or less of the slip agent based on the total weight of the sealant layer. When the slip agent is added in excess of the above range, the sealing strength may decrease, poor winding condition and non-uniformity of physical properties over time may appear, and foreign mattr problems may occur during the processing stage, thereby impairing the reliability of the product. When too little slip agent is comprised, formability may be reduced.

In the present disclosure, the outer layer refers to a layer having heat resistance, wear resistance, chemical resistance, etc. to protect the metal layer. As one embodiment, the outer layer may comprise one or more selected from the group consisting of polybutylene adipate terephthalate (PBAT), polybutylene succinate (PBS), polyhydroxy aldehyde (PHA), polylactic acid (PLA), thermoplastic starch (TPS), polyvinyl alcohol (PVA), polycaprolactam (PCL), polyethylene (PE), polypropylene (PP), ethylene vinyl acetate (EVA), ethylene vinyl alcohol (EVOH), polyvinylidene chloride (PVDC), polyethylene terephthalate (PET), and nylon. More specifically, the outer layer may comprise one or more resins selected from the group consisting of nylon resin, polyethylene terephthalate (PET), and polybutylene terephthalate (PBT). As one embodiment, the outer layer may have a thickness of 5 µm to 40 µm. The outer layer may be composed of a plurality of layers.

In the specification, the metal layer refers to a barrier layer which has the ability to block water vapor or air from outside the battery, gas generated inside the battery, and/or moisture. As one embodiment, the metal layer may further comprise a surface treatment layer uniformly coated on one or both sides of the metal layer. In one embodiment, the metal layer may be a metal thin film or a metal deposition layer. The metal thin film may be, for example, a metal foil. The metal deposition layer may be formed by vacuum depositing a metal on a separate plastic film, for example, polyethylene terephthalate (PET), polyethylene (PE), or polypropylene (PP).

As one embodiment, the metal of the metal layer is not limited as long as it has the above-mentioned blocking performance, but examples comprise one or more selected from a group consisting of aluminum (Al), iron (Fe), copper (Cu), magnesium (Mg), nickel (Ni), tin (Sn), zinc (Zn), indium (In), and tungsten (W) (a single metal or a mixture of single metals), or an alloy of two or more selected from these. Specifically, the metal may comprise one or more selected from the group consisting of aluminum or its alloy, titanium or its alloy, tungsten or its alloy, molybdenum or its alloy, copper or its alloy, and stainless steel. More specifically, it may comprise aluminum. As one embodiment, the surface treatment layer may be a surface treatment layer made of phosphoric acid, chromium, zirconium, cerium, lanthanum, scandium, yttrium, etc. to provide corrosion resistance to metal.

As one embodiment, the metal layer may have a thickness of 20 µm to 80 µm. When the thickness of the metal layer is less than 20 µm, pinholes, microcracks, etc. may occur during forming processes, making it difficult to ensure safety, and when the thickness of the metal layer exceeds 80 µm, the energy density during battery manufacturing may be lowered.

One embodiment of the present disclosure may further comprise an adhesive layer between the metal layer and the outer layer for adhesion of the metal layer and the outer layer. In addition, an embodiment of the present disclosure may further comprise an adhesive layer between the sealant layer and the metal layer for adhesion of the metal layer and the sealant layer. Specifically, the adhesive layer may be an adhesive layer and/or an extruded resin layer. For example, the adhesive layer may comprise one or more of an epoxy-based adhesive, a polyurethane-based adhesive, a phenolic resin-based adhesive, a polyolefin-based adhesive, and a polyester-based adhesive. As one embodiment, the adhesive layer may have a thickness of 0.5 µm to 10 µm. For example, the extruded resin layer may comprise an olefin-based resin such as polypropylene-based resin. As one embodiment, the extruded resin layer may have a thickness of about 5 to 80 µm.

One embodiment of the present disclosure may provide a cell pouch comprising the film for a cell pouch described above.

Another embodiment of the present disclosure may provide a method of storing the above-described film for cell pouches, comprising a step of storing at a temperature of 48 to 57 °C. Specifically, the storage temperature may be 48 °C or higher, 49 °C or higher, 50 °C or higher, 51°C or higher, 52 °C or higher, 53 °C or higher, or 54°C or higher, and may be 57 °C or lower, 56 °C or lower, 55 °C or lower, 54 °C or lower, 53 °C or lower, 52 °C or lower, or 51 °C or lower. When the storage temperature exceeds 57°C, formability may decrease, and when it is lower than 48°C, excess slip agent may leak and coagulate, causing defects in the process and reducing product reliability.

In one embodiment, the storage period of the storage step may be 10 days or more. Specifically, it may be 10 days or more, 20 days or more, 30 days or more, 40 days or more, 50 days or more, 60 days or more, 70 days or more, 80 days or more, 90 days or more, 100 days or more, 150 days or more, 200 days or more, or 250 days or more, and may be 300 days or less, 200 days or less, 100 days or less, 90 days or less, 80 days or less, 70 days or less, 60 days or less, 50 days or less, 40 days or less, 30 days or less, or 20 days or less.

In one embodiment, the relative humidity in the storage step may be 5% to 25%.

Hereinafter, the present disclosure will be described in more detail through the embodiments. These embodiments are only for illustrating the present disclosure, and it will be apparent to those skilled in the art which the scope of the present disclosure should not be construed as limited by these embodiments.

### [Manufacturing example]

One example of the present disclosure was manufactured according to the following method.

A film for a cell pouch was manufactured by forming an outer layer of 25 µm with a polyethylene terephthalate film on one side of a 60 µm thick metal layer made of aluminum foil metal fabric, and laminating an unstretched polypropylene film comprising 0.1 to 20 wt% of an amide-based slip agent based on the total weight of the sealant layer on the other side of the metal layer to form a sealant layer of 80 µm.

As an example of the present disclosure, a film for a cell pouch may be manufactured using an outer layer in which a polyethylene terephthalate film of 12 µm and a nylon film of 25 µm are laminated. In this case, it was confirmed that the results of the test examples described below were the same.

### [Test Example 1]

In order to check the surface roughness according to the storage temperature when storing the film manufactured in the above manufacturing example, the following experiment was conducted.

First, a slip inspection device was prepared in which the surface of a metal (iron) (weight: approximately 1.3 kg) in the form of a cube was wrapped with a black pouch (manufacturer: Yulchon Chemical). The film manufactured in the above manufacturing example cut to size 50mm X 240 mm was fixed on a flat surface with the sealant layer on top, and then the black pouch of the device was rubbed once at a speed of 400 mm/10 s against the sealant layer of each film stored at different storage temperatures. Afterwards, the area where the slip agent leaked from the film formed a white band on the black pouch was cut into 1x1 cm² pieces and placed flat on a slide glass using double-sided tape, then surface roughness was measured using a surface roughness measurement device (For example, NV-2200 3D profiler, Nano system product) and an analysis program (NanoMap, product of Nano system).

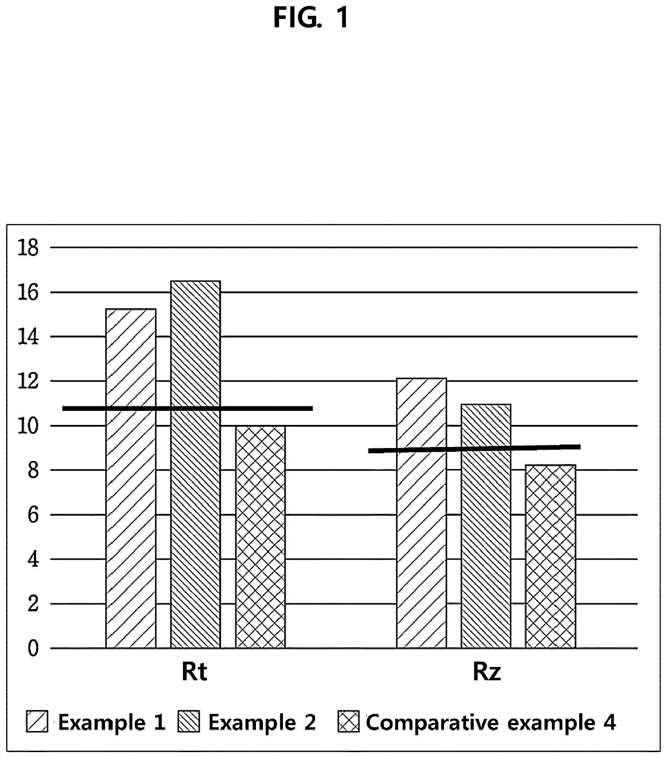

Among these, the results of examples 1 and 2, and comparative example 4 are shown in FIG. 1 and Table 1.

**Table 1**

| Unit: µm (average value) | Example 1 | Example 2 | Comparative Example 1 | Comparative Example 2 | Comparative Example 3 | Comparative Example 4 |
|---|---|---|---|---|---|---|
| storage temperature | 50°C | 55°C | 60°C | -15°C | 25°C | 45°C |
| Rt | 15.295 | 16.54667 | 8.87 | 11.34 | 10.03 | 10.06 |
| Rz | 12.15 | 11 | 7.02 | 8.68 | 8.55 | 8.2475 |

As shown in the above results, examples 1 and 2 of the present disclosure may be confirmed that the surface roughness is within the range of Rt 13 to 20 µm and Rz 10 to 15 µm through storage temperature control.

### [Test Example 2]

In order to confirm the slip agent agglomeration pattern, friction coefficient, and formability according to the surface roughness of the film according to an embodiment of the present disclosure, the following experiment was conducted on examples 1 and 2 and comparative examples 1-4, whose surface roughness was confirmed in test example 1, and the measured values are shown in tables 2 to 9. At this time, the formability, slip test, and friction coefficient of each film were measured at room temperature on day 0, and then stored at each set storage temperature and observed for 90 days.

### Slip test

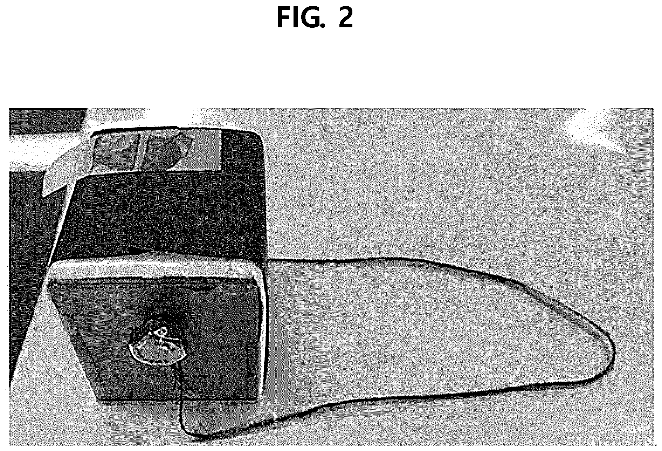

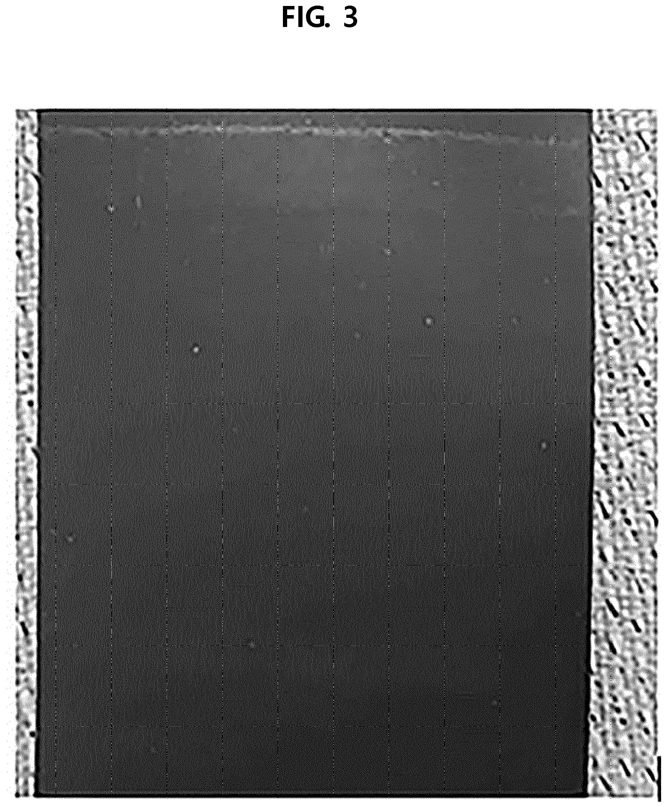

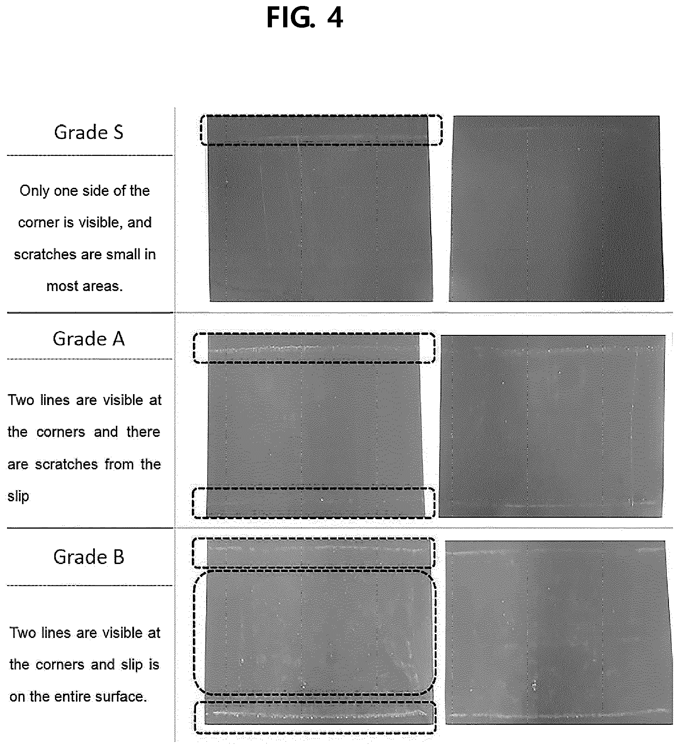

The slip test is to measure the amount or agglomeration pattern of slip agent flowing out to the surface of the sealant layer or outer layer of the cell pouch film. The slip inspection device is prepared in the same way as that used when measuring the surface roughness, the manufactured film was cut to a size of 50mm x 240 mm, then was fixed on a flat surface with the sealant layer or outer layer on top, and then rubbed against the sealant layer or outer layer of each prepared film at a speed of 400 mm/10 s. This was repeated once when the sealant layer was rubbed, and five times when the outer layer was rubbed. Afterwards, the area where the slip agent leaked from each film was smeared and formed a white band on the black pouch was photographed using a scanning electron microscope (SEM Manufacturer: HITACHI, product name: SU3500), and the size of the slip agent agglomeration particles was confirmed and evaluated with the naked eye. FIG. 2 is a photograph of the slip inspection device used in the above experiment, and FIG. 3 is an image taken of the black pouch after the above experiment, and it may be seen that a white band is formed at the top of the black pouch image. As shown in FIG. 4, as a result of visual evaluation, when only one side of the edge was visible and there were few scratches on most of the area, it was rated as grade S; when 2 lines were visible in the corner area (white stripe area) and there were scratches from the slip agent, it was rated as grade A (A+, A0, or A-); and when 2 lines were visible in the corner area and the slip agent was smeared on the entire surface, it was rated as grade B.

In addition, when analyzing the SEM image, the number of agglomeration particles of the largest size among the agglomerated slip agent particles present in the area where the slip agent was stained and a white band was formed on the black pouch was selected and its average diameter was confirmed.

### Friction coefficient measurement

Each of the prepared films was cut to a size of 200 X 100 mm, and then the friction coefficient of each film was measured using a friction coefficient meter (manufacturer: Labsink, product name: CF-800XS). Specifically, a specimen of each film was prepared in a size of 200 mm X 100 mm and then adhered flat to the bottom of the friction coefficient measuring device, then a 70 mm x 60 mm-sized specimen of the same film was attached to a frame equipped with a friction coefficient and connected to the equipment with a string. After the two films were placed on the equipment so that they were in contact, the bottom of the equipment moved at a speed of 15 mm/1 s for 55 seconds, and the film in the frame held by a string was fixed and the coefficient of friction between the two films was measured.

### Formability measurement

Each of the prepared films was cut to a size of 200 X 100 mm, and then the films were formed by applying a pressure of 0.3 MPa in a cup-shaped mold (manufacturer: Kwangshin High Tech, Model Name: GS-S5), and the maximum depth at which no cracks or breaks occurred during molding was measured. At this time, when all 10 out of 10 identical film specimens were not broken, a deeper depth was applied, and when even one break occurred, the depth just before that was defined as the maximum height.

**Table 2**

| Comparative Example 1 | | | | | | | | |
|---|---|---|---|---|---|---|---|---|
| item | | -15°C | | | | | | |
| | | 0 days | 1 day | 4 days | 7 days | 14 days | 30 days | 90 days |
| Formability | | 13 | 13.5 | 14 | 14 | 14 | 15 | 13.5 |
| slip test | Sealant layer surface | A0 60 µm ↑ | A0 60 µm ↑ | A0 60 µm ↑ | A0 60 µm ↑ | A-60 µm ↑ | A-60 µm ↑ | A-60 µm ↑ |
| | outer layer surface | S 60 µm ↓ | S 60 µm ↓ | A+ 60 µm ↓ | A0 160 µm T | A0 60 µm ↑ | A0 60 µm ↑ | A0 60 µm ↑ |
| friction Coefficient | Sealant layer surface | 0.1 | 0.16 | 0.1 | 0.11 | 0.12 | 0.12 | 0.11 |
| | outer layer surface | 0.1 | 0.11 | 0.09 | 0.11 | 0.07 | 0.08 | 0.09 |

**Table 3**

| Comparative Example 2 | | | | | | | | |
|---|---|---|---|---|---|---|---|---|
| item | | 25°C | | | | | | |
| | | 0 days | 1 day | 4 days | 7 days | 14 days | 30 days | 90 days |
| Formability | | 13 | 13 | 13 | 13 | 13 | 14 | 13 |
| slip test | Sealant layer surface | A- | A- | A- | A- | A+ | A+ | A- |
| | | 60 µm ↑ | 60 µm ↑ | 60 µm ↑ | 60 µm ↑ | 60 µm ↑ | 60 µm ↑ | 60 µm ↑ |
| | outer layer surface | S | S | S | S | S | S | S |
| | | 60 µm ↓ | 60 µm ↓ | 60 µm ↓ | 60 µm ↓ | 60 µm ↓ | 60 µm ↓ | 60 µm ↓ |
| friction Coefficient | Sealant layer surface | 0.11 | 0.11 | 0.11 | 0.11 | 0.12 | 0.13 | 0.15 |
| | outer layer surface | 0.19 | 0.1 | 0.12 | 0.09 | 0.2 | 0.16 | 0.17 |

**Table 4**

| Comparative Example 3 | | | | | | | | |
|---|---|---|---|---|---|---|---|---|
| item | | 40°C | | | | | | |
| | | 0 days | 1 day | 4 days | 7 days | 14 days | 30 days | 90 days |
| Formability | | 13.5 | 13 | 14 | 14 | 14 | 14.5 | 14.5 |
| slip test | Sealant layer surface | A- | A0 | A- | A0 | A0 | A0 | A- |
| | | 60 µm ↑ | 60 µm ↑ | 60 µm ↑ | 60 µm ↑ | 60 µm ↑ | 60 µm ↑ | 60 µm ↑ |
| | outer layer surface | | | | | | | |
| | Sealant layer | S | S | A- | A0 | A- | A0 | A- |
| | | 60 µm ↓ | 60 µm ↓ | 60 µm ↑ | 60 µm ↑ | 60 µm ↑ | 60 µm ↑ | 60 µm ↑ |
| | surface | | | | | | | |
| | outer layer surface | | | | | | | |
| friction Coefficient | Sealant layer surface | 0.12 | 0.12 | 0.1 | 0.1 | 0.08 | 0.07 | 0.1 |
| | outer layer surface | 0.14 | 0.13 | 0.13 | 0.12 | 0.1 | 0.09 | 0.09 |

**Table 5**

| Comparative Example 4 | | | | | | | | |
|---|---|---|---|---|---|---|---|---|
| item | | 45°C | | | | | | |
| | | 0 days | 1 day | 4 days | 7 days | 14 days | 30 days | 90 days |
| Formability | | 14.5 | 16 | 15.5 | 15 | 14.5 | 17.5 | 18.0 |
| slip test | Sealant layer surface | S | S | S | S | S | S | S |
| | | 60 µm ↑ | 60 µm ↓ | 60 µm ↓ | 60 µm ↓ | 60 µm ↓ | 60 µm ↓ | 60 µm ↓ |
| | outer layer surface | | | | | | | |
| | Sealant layer surface | S | S | S | S | A+ | A0 | A0 |
| | | 60 µm ↓ | 60 µm ↓ | 60 µm ↓ | 60 µm ↓ | 60 µm ↑ | 60 µm ↑ | 60 µm ↑ |
| | outer layer surface | | | | | | | |
| friction Coefficient | Sealant layer | 0.21 | 0.22 | 0.19 | 0.14 | 0.2 | 0.17 | 0.14 |
| | surface | | | | | | | |
| | outer layer surface | 0.19 | 0.13 | 0.09 | 0.27 | 0.08 | 0.1 | 0.09 |

**Table 6**

| Example 1 | | | | | | | |
|---|---|---|---|---|---|---|---|
| item | | 50°C | | | | | |
| | | 1 day | 4 days | 7 days | 14 days | 30 days | 90 days |
| Formability | | 15 | 16 | 16.5 | 17.5 | 19 | 18.5 |
| slip test | Sealant layer surface | S | S | S | S | S | S |
| | | 60 µm ↑ | 60 µm ↓ | 60 µm ↓ | 60 µm ↓ | 60 µm ↓ | 60 µm ↓ |
| | outer layer surface | | | | | | |
| | Sealant layer surface | S | S | S | S | S | S |
| | | 60 µm ↓ | 60 µm ↓ | 60 µm ↓ | 60 µm ↓ | 60 µm ↓ | 60 µm ↓ |
| | outer layer surface | | | | | | |
| friction Coefficient | PP side | 0.24 | 0.22 | 0.2 | 0.2 | 0.22 | 0.19 |
| | PET side | 0.09 | 0.08 | 0.11 | 0.1 | 0.09 | 0.09 |

**Table 7**

| Example 2 | | | | | | | | |
|---|---|---|---|---|---|---|---|---|
| item | 55°C | | | | | | | |
| | | 0 days | 1 day | 4 days | 7 days | 14 days | 30 days | 90 days |
| Formability | | 14.5 | 14.5 | 16 | 15.5 | 15.5 | 18.5 | 18.5 |
| slip test | Sealant layer surface | S | S | S | S | S | S | S |
| | | 60 µm ↑ | 60 µm ↓ | 60 µm ↓ | 60 µm ↓ | 60 µm ↓ | 60 µm ↓ | 60 µm ↓ |
| | outer layer surface | | | | | | | |
| | sealant layer surface | S | S | S | S | S | S | S |
| | | 60 µm ↓ | 60 µm ↓ | 60 µm ↓ | 60 µm ↓ | 60 µm ↓ | 60 µm ↓ | 60 µm ↓ |
| | outer layer surface | | | | | | | |
| friction | PP side | 0.21 | 0.32 | 0.24 | 0.24 | 0.23 | 0.27 | 0.22 |
| Coefficient | PET side | 0.13 | 0.07 | 0.08 | 0.11 | 0.09 | 0.08 | 0.09 |

**Table 8**

| Comparative Example 5 | | | | | | | | |
|---|---|---|---|---|---|---|---|---|
| item | | 60°C | | | | | | |
| | | 0 days | 1 day | 4 days | 7 days | 14 days | 30 days | 90 days |
| Formability | | 13 | 13 | 12.5 | 12 | 11 | 12.5 | 10.5 |
| slip test | Sealant layer surface | S | S | S | S | S | S | S |
| | | 60 µm ↑ | 60 µm ↓ | 60 µm ↓ | 60 µm ↓ | 60 µm ↓ | 60 µm ↓ | 60 µm ↓ |
| | outer layer surface | | | | | | | |
| | Sealant | A | A | S | S | S | S | S |
| | layer surface | 60 µm ↓ | 60 µm ↓ | 60 µm ↓ | 60 µm ↓ | 60 µm ↓ | 60 µm ↓ | 60 µm ↓ |
| | outer layer surface | | | | | | | |
| friction | PP side | 0.09 | 0.34 | 0.66 | 0.78 | 1.1 | 1.4 | 0.85 |
| Coefficient | PET side | 0.13 | 0.15 | 0.16 | 0.14 | 0.09 | 0.09 | 0.09 |

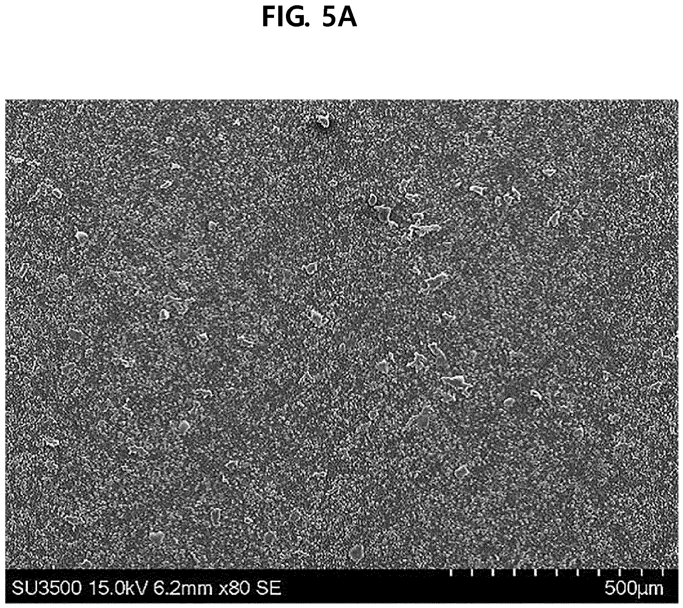

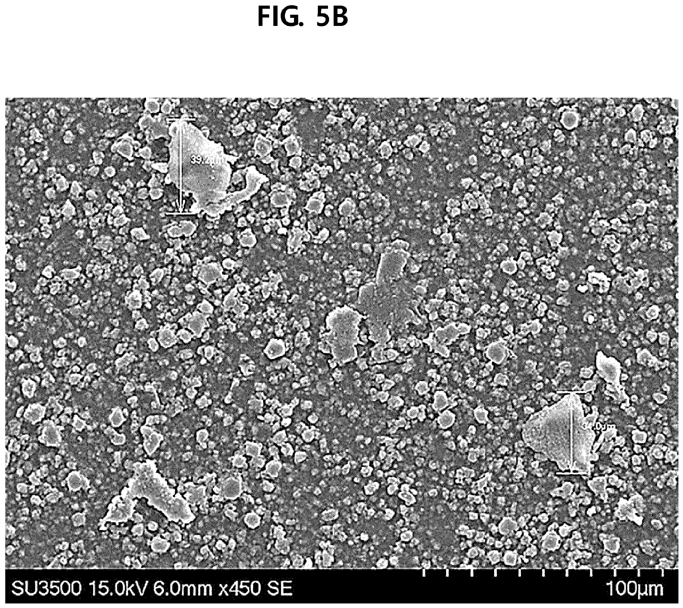

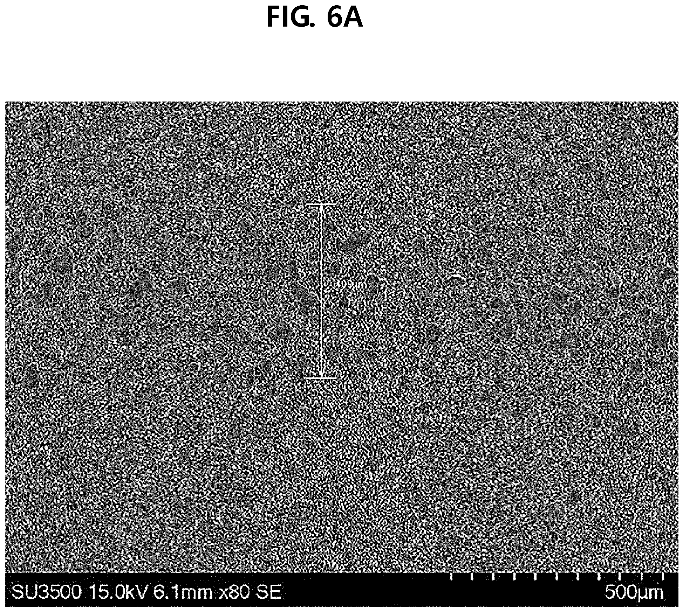

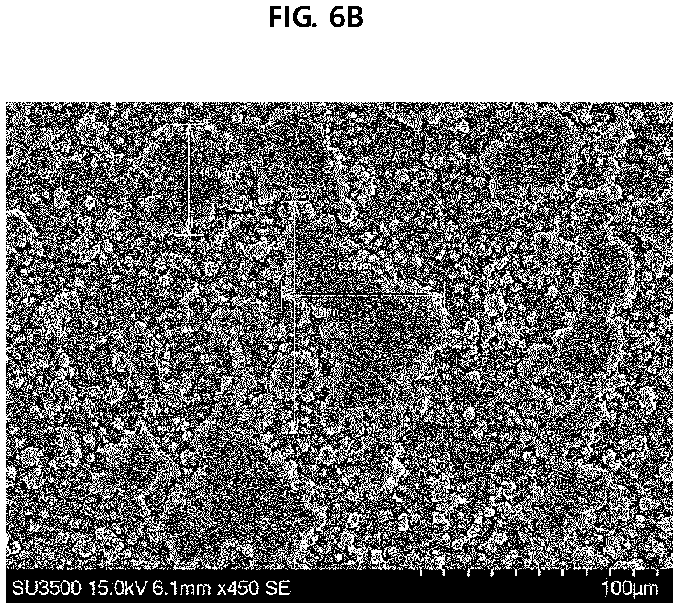

FIGS. 5A, 5B, 6A, and 6B show the results of analysis of the particle size formed by agglomeration of the slip agent leaked after the slip test. FIG. 5A and FIG. 5B are photographs of the film of example 1 in the above table, and the average diameter of the largest agglomerated particles present in the SEM image was 39.2 µm. FIG 6A and FIG. 6B are photographs of the film of comparative example 4 in the table above, respectively. The average diameter of the largest agglomerated particles present in the SEM image of comparative example 4 was 40.9 µm, and the average diameter of the largest agglomerated particles present in the SEM image of comparative example 4 was 97.5 µm.

The above results are summarized and shown in the table below.

| Table 9 | | | | | | |
|---|---|---|---|---|---|---|
| | Example 1 | Example 2 | Comparative Example 1 | Comparative Example 2 | Comparative Example 3 | Comparative Example 4 |
| storage temperature | 50°C | 55°C | 60°C | -15°C | 25°C | 45°C |
| Surface roughness Rt (µm) | 15.295 | 16.54667 | 8.87 | 11.34 | 10.03 | 10.06 |
| Surface roughness Rz (µm) | 12.15 | 11 | 7.02 | 8.68 | 8.55 | 8.2475 |
| Sealant layer slip test results | S | S | S | A | A | A |
| | 60 µm ↓ | 60 µm ↓ | 60 µm ↑ | 60 µm ↑ | 60 µm ↑ | 60 µm ↑ |
| Sealant layer friction coefficient after 30 days of storage | 0.20 | 0.22 | 0.85 | 0.11 | 0.15 | 0.17 |
| Improved formability compared to day 0 | 3.5mm | 4.0mm | -2.5mm | 0.5 mm | 0.0 mm | 3.5mm |

As shown in the above results, unlike comparative examples 1 to 4, examples 1 and 2 of the present disclosure satisfied the surface roughness range of Rt from 13 to 20 µm and Rz from 10 to 15 µm, and the size of the slip agent agglomerated particles present on the surface of the sealant layer during the slip test decreased to 60 µm or less. In addition, examples 1 and 2, the friction coefficient of the silane layer was maintained at 0.15 or more, and the formability increased by about 40 % compared to room temperature (day 0), confirming that the formability was high even though a small amount of the slip agent leaked.

### [Test Example 3]

Films were manufactured according to the above production example, and examples 3 and 4, which satisfied the surface roughness range of the film Rt 13 to 20 µm, Rz 10 to 15 µm, and comparative examples 5 to 8, which were outside the above range, were prepared by adjusting the storage temperature.

In order to check the slip agent agglomeration pattern, friction coefficient, and formability according to the surface roughness of the film, the surface roughness, slip test, friction coefficient, and formability of each film were measured using the same method as described in test examples 1 and 2, and each measured value is shown in table 10.

**[Table 10]**

| Unit: µm (average value) | Comparative Example 5 | Comparative Example 6 | Comparative Example 7 | Comparative Example 8 | Example 3 | Example 4 |
|---|---|---|---|---|---|---|
| Rt | 5 | 8 | 10 | 12 | 13 | 15 |
| Rz | 3 | 6 | 7 | 8 | 10 | 12 |
| Sealant layer slip test results | A | A | A | A | S | S |
| Sealant layer friction coefficient after 30 days of storage | 0.11 | 0.14 | 0.16 | 0.18 | 0.21 | 0.23 |
| Improved formability compared to day 0 | -2.5 | -0.5 | 0.5 | 2.0 | 3.0 | 3.5 |

As a result, examples 3 and 4 of the present disclosure, which satisfied the surface roughness ranges of Rt 13 to 20 and Rz 10 to 15, both received grade S in the slip test results and showed a high friction coefficient of 0.2 or more. In addition, although examples 3 and 4 comprised the same amount of slip agent as comparative examples 5-8, the amount of slip agent flow was adjusted to satisfy the surface roughness value, and it was confirmed that the formability was significantly high.

The present disclosure may provide the following embodiments as one embodiment.

### [Embodiment 1]

A film for a cell pouch, comprising:
a sealant layer comprising a slip agent;
a metal layer formed on the sealant layer; and
an outer layer formed on the metal layer,
wherein when the film was stored for 30 days at a temperature of 48 to 57°C and then a slip inspection device is used in which a cube-shaped metal weighing 1.3 kgf is wrapped in a black pouch with a matte black exterior and an outer layer made of nylon, the outer surface of the black pouch is rubbed with the sealant layer or outer layer of the film at a speed of 400 mm/10 s, the surface roughness value of the portion where the slip agent leaking from the film forms a white band on the black pouch satisfies Rt 13 to 20 µm and Rz 10 to 15 µm .

### [Embodiment 2]

In the first embodiment, wherein when the film was stored for 30 days at a temperature of 48 to 57°C and then a slip inspection device is used in which a cube-shaped metal weighing 1.3 kgf is wrapped in a black pouch with a matte black exterior and an outer layer made of nylon, the outer surface of the black pouch is rubbed with the sealant layer or outer layer of the film at a speed of 400 mm/10 s, the film has an average diameter of the largest agglomerated particles of the slip agent present in the area where the slip agent leaked from the film forms a white band on the black pouch and is 60 µm or less.

### [Embodiment 3]

In the first or second embodiment, wherein the film has a coefficient of friction of the sealant layer of 0.15 to 0.5 after storage for 30 days at a temperature of 48 to 57 °C.

### [Embodiment 4]

According to any one of the first to third embodiments, wherein the film has a formability of 15 to 25 mm after storage for 30 days at a temperature of 48 to 57 °C, and
wherein the formability is measured by applying a pressure of 0.3 MPa to the film and measuring the maximum depth at which no cracking occurs when molding 1 cup.

### [Embodiment 5]

In any one of the first to fourth embodiments, wherein the film is for storage at a temperature of 48 to 57 °C.

### [Embodiment 6]

In any one of the first to fifth embodiments, wherein the film comprises 0.1 to 20 wt% of a slip agent based on the total weight of the sealant layer.

### [Embodiment 7]

In any one of the first to sixth embodiments, wherein the slip agent comprises one or more of wax-based, amide-based, siloxane, and silicone.

### [Embodiment 8]

In any one of the first to seventh embodiments, the metal layer comprises at least one selected from the group consisting of aluminum or its alloy, titanium or its alloy, tungsten or its alloy, molybdenum or its alloy, copper or its alloy, and stainless steel.

### [Embodiment 9]

In any one of the first to eighth embodiments, wherein the outer layer comprises at least one selected from the group consisting of polybutylene adipate terephthalate (PBAT), polybutylene succinate (PBS), polyhydroxy aldehyde (PHA), polylactic acid (PLA), thermoplastic starch (TPS), polyvinyl alcohol (PVA), polycaprolactam (PCL), polyethylene (PE), polypropylene (PP), ethylene vinyl acetate (EVA), ethylene vinyl alcohol (EVOH), polyvinylidene chloride (PVDC), polyethylene terephthalate (PET) and nylon.

### [Embodiment 10]

In any one of the first to ninth embodiments, wherein the sealant layer comprises a heat-sealing resin.

### [Embodiment 11]

A method for storing the film for a cell pouch according to any one of the first to tenth embodiments, comprising a step of storing the film at a temperature of 48 to 57 °C.

### [Embodiment 12]

The storage method according to the 11th embodiment, wherein the storage period of the step is 10 to 300 days.

### [Embodiment 13]

The storage method according to the 11th or 12th embodiment, wherein the relative humidity during storage in the step is 5 % to 25 %.

## Claims

1. A film for a cell pouch, comprising:
a sealant layer comprising a slip agent;
a metal layer formed on the sealant layer; and
an outer layer formed on the metal layer;
wherein when the film was stored for 30 days at a temperature of 48 to 57°C and then the outer surface of the black pouch is rubbed with the sealant layer or outer layer of the film at a speed of 400 mm/10 s using a slip inspection device in which a 1.3 kgf cube-shaped metal is wrapped in a black pouch with a matte black exterior and an outer layer made of nylon, the surface roughness value of the area where the slip agent leaked from the film forms a white band on the black pouch satisfies Rt 13 to 20 µm and Rz 10 to 15 µm.

2. The film of claim 1, wherein when the film was stored for 30 days at a temperature of 48 to 57°C and the outer surface of the black pouch is rubbed with the sealant layer or outer layer of the film at a speed of 400 mm/10 s using a slip inspection device in which a 1.3 kgf cube-shaped metal is wrapped in a black pouch with a matte black exterior and an outer layer made of nylon, the film has an average diameter of the largest agglomerated particles of the slip agent present in the area where the slip agent leaked from the film forms a white band on the black pouch and is 60 µm or less.

3. The film according to claim 1, wherein the sealant layer has a friction coefficient of 0.15 to 0.5 after being stored at a temperature of 48 to 57 °C. for 30 days.

4. The film of claim 1, wherein the film has a formability of 15 to 25 mm after storage for 30 days at a temperature of 48 to 57 °C, where the formability is measured by applying a pressure of 0.3 MPa to the film and measuring the maximum depth at which no breakage occurs when molding 1 cup.

5. The film of claim 1, wherein the film is intended to be stored at a temperature of 48 to 57 °C.

6. The film of claim 1, wherein the film comprises 0.1 to 20% by weight of a slip agent based on the total weight of the sealant layer.

7. The film according to claim 1, wherein the slip agent comprises one or more of wax-based, amide-based, siloxane, and silicone.

8. The film of claim 1, wherein the metal layer comprises at least one selected from the group consisting of aluminum or its alloy, titanium or its alloy, tungsten or its alloy, molybdenum or its alloy, copper or its alloy, and stainless steel..

9. The film of claim 1, wherein the outer layer comprises one or more selected from the group consisting of polybutylene adipate terephthalate (PBAT), polybutylene succinate (PBS), polyhydroxy aldehyde (PHA), polylactic acid (PLA), thermoplastic starch (TPS), polyvinyl alcohol (PVA), polycaprolactam (PCL), polyethylene (PE), polypropylene (PP), ethylene vinyl acetate (EVA), ethylene vinyl alcohol (EVOH), polyvinylidene chloride (PVDC), polyethylene terephthalate (PET) and nylon.

10. The film of claim 1, wherein the sealant layer comprises a heat-sealing resin.

11. A storage method of the film for a cell pouch according to any one of claims 1 to 10, comprising: a step of storing the film at a temperature of 48 to 57 °C.

12. The storage method of claim 11, wherein the storage period of the step is 10 to 300 days.

13. The storage method of claim 11, wherein the relative humidity during storage in the above step is 5% to 25%.
